# EUROPÄISCHE PATENTANMELDUNG

(11) **EP 1 688 600 A2**
(43) Veröffentlichungstag der Anmeldung: **09.08.2006**
(21) Anmeldenummer: 06450015.0
(22) Anmeldetag: 27.01.2006
(51) Int. Cl.: F01N 3/28, F01N 3/035, F01N 3/021

(54) **Vorrichtung zum Reinigen von Kraftfahrzeugabgasen**

(30) Priorität: 02.02.2005 AT 1682005
(71) Anmelder: Pankl Emission Control Systems GmbH, 8605 Kapfenberg (AT)
(72) Erfinder: Mayer, Hanspeter, 5421 Adnet (AT); Klawatsch, Dominikus, 7203 Weisen (AT)
(74) Vertreter: Wirnsberger, Gernot

(57) **Zusammenfassung**

Die Erfindung betrifft eine Vorrichtung (1) zum Reinigen von Kraftfahrzeugabgasen, umfassend ein metallisches Gehäuse (2) mit mehreren Einlässen (31, 32, 33, 34) für ein zeitversetztes Einleiten einzelner Abgasströme (Z1, Z2, Z3, Z4) und zumindest einem Auslass zum Ableiten von Abgas, wobei innerhalb des Gehäuses (2) zumindest ein Reinigungsmodul (51, 52, 53, 54) mit zumindest einem Filterelement (6) und/oder zumindest einem Katalysatorelement (71, 72, 73) derart angeordnet ist, dass eingeleitete Abgasströme (Z1, Z2, Z3, Z4) durch das Reinigungsmodul (51, 52, 53, 54) zum Auslass (4) strömen. Um Druckspitzen an dem oder den Reinungsmodul(en) (51, 52, 53, 54) ist vorgesehen, dass dem Reinigungsmodul (51, 52, 53, 54) einlassseitig ein gasdurchlässiger Metallschaumkörper (8) vorgeschalten ist.

## Beschreibung

Die Erfindung betrifft eine Vorrichtung zum Reinigen von Kraftfahrzeugabgasen, umfassend ein metallisches Gehäuse mit mehreren Einlässen für ein zeitversetztes Einleiten einzelner Abgasströme und zumindest einem Auslass zum Ableiten von Abgas, wobei innerhalb des Gehäuses zumindest ein Reinigungsmodul mit zumindest einem Filterelement und/oder zumindest einem Katalysatorelement derart angeordnet ist, dass eingeleitete Abgasströme durch das Reinigungsmodul zum Auslass strömen.

Kraftfahrzeugabgase, welche ungereinigt oder wenig gereinigt von PKWs und Nutzfahrzeugen bei deren Betrieb ausgestoßen werden, werden als eine der Hauptursachen von Umweltverschmutzung angesehen. In vielen Staaten bzw. Regionen wird deswegen versucht, dieser tendenziell zunehmenden, nachteiligen Belastung der Umwelt durch gesetzgeberische Maßnahmen, nämlich Vorschreiben von zulässigen Schadstoffhöchstwerten für Abgase von Kraftfahrzeugen, entgegen zu treten.

Da mit neuen gesetzgeberischen Maßnahmen bzw. Normen die Schadstoffhöchstwerte für Abgase regelmäßig weiter gesenkt werden, besteht auf Seite der Automobilhersteller eine stetige Anforderung, Abgase von Kraftfahrzeugen besser bzw. wirkungsvoller zu reinigen. Bislang konzentrierte man sich überwiegend auf eine Verbesserung des Wirkungsgrades von Reinigungsmodulen für Kraftfahrzeugabgase an sich, welche beispielsweise beschichtete Katalysatorelemente zur Umwandlung von Stickoxiden und/oder Filterelemente wie Dieselrusspartikelfilter enthalten.

Daneben ist man auch dazu übergegangen, um eine möglichst effektive Reinigung von Abgasen zu erreichen, den gesamten im Abgastrakt zur Verfügung stehenden Raum bestmöglich für Reinigungsmodule auszunutzen. So ist man auch bestrebt, nicht nur einen Endtopf oder Schalldämpfer zur Aufnahme von Reinigungsmodulen auszunützen, sondern auch einen vorderen, an den Motor anschließenden Teil eines Abgastraktes, in welchen das durch den Betrieb eines Motors erzeugte Abgas mit einer Temperatur zwischen etwa 500 und 800 °C über einzelne Einlässe direkt eingeleitet wird. Werden Reinigungsmodule auch an derartigen Stellen eingesetzt, so steht ein größeres Raumangebot für Reinigungsmodule zur Verfügung. Allerdings kann es, wenn mehrere Einlässe bestehen, über welche Abgasströme zugeführt werden, zu einer unerwünschten Belastung des/der Reinigungsmodule kommen, da ein örtlich konzentriertes und zeitversetztes, stoßweises Zuführen von Abgas zu Druckspitzen an den Modulen führen kann, was insbesondere bei hohen Abgastemperaturen und somit auch hoher thermischer Belastung zu einer Schädigung derselben führen kann.

Vor diesem Hintergrund ist es Aufgabe der Erfindung, eine Vorrichtung der eingangs genannten Art anzugeben, bei der eine Belastung des oder der Reinigungsmodule durch eingeleitete Abgasströme vermindert ist.

Die gestellte Aufgabe wird durch eine Vorrichtung nach Anspruch 1 gelöst. Vorteilhafte Ausführungsformen sind Gegenstand der abhängigen Ansprüche 2 bis 11.

Die mit der Erfindung erzielten Vorteile sind insbesondere darin zu sehen, dass durch einen gasdurchlässigen Metallschaumkörper auf Grund dessen labyrinthartiger bzw. unregelmäßig verzweigter Porenstruktur eine Aufspaltung eines einzelnen, gerichteten und intensiven Abgasstromes in viele diffuse Teilströme geringerer Intensität erfolgt. In der Folge gelangt das Abgas zerstreut und mit geringerer Intensität auf die nachgeschalteten Reinigungsmodule und hohe Druckspitzen an diesen können vermieden werden. Schaumkörper aus Metall bieten in diesem Zusammenhang den Vorteil einer guten Wärmeleitung, weshalb in der Vorrichtung auch eine gute Verteilung der vom Abgas aufgenommen Wärme erreicht wird und einer lokalen Überhitzung entgegengewirkt wird. Dies ist nicht nur hinsichtlich einer geringen thermischen Belastung des Metallschaumkörpers selbst sondern auch der Reinigungsmodule wichtig, da diese keramische Elemente oder Beschichtungen enthalten können, welche nur wenig thermisch belastbar sind oder eine geringe Temperaturwechselbeständigkeit aufweisen.

In einer bevorzugten Variante der Erfindung weist der Metallschaumkörper eine Porenweite von 5 bis 20 ppi (pores per inch) auf. In diesem Porenweitenbereich kann eine gute Verteilung bzw. Aufteilung von zeitversetzt zugeleiteten Abgasströmen erreicht werden. Beträgt die Porenweite weniger als 5 ppi, so ist eine Aufteilung der Abgasströme gröber als im bevorzugten Bereich. Im Übrigen weisen dann Poren eine durchschnittliche Größe auf, bei der die strukturelle Stabilität des Metallschaums bei hohen Temperaturen leiden kann. Bei einer Porenweite von mehr als 20 ppi beginnt der Metallschaumkörper als Filter für Partikel zu wirken, was grundsätzlich nicht gewollt ist.

In Hinblick auf eine hohe Strukturstabilität bei thermischer Belastung, gegebenenfalls wechselnder thermischer Belastung, ist es von Vorteil, wenn der Metallschaumkörper aus einer Eisenbasislegierung gebildet ist. Als besonders geeignet hat sich eine Eisenbasislegierung erwiesen, welche (in Gewichtsprozent)
15 bis 30 % Chrom,
5 bis 10 % Vanadium,
bis 2 % Aluminium,
bis 2 % Yttrium,
bis 2 % Cer,
bis 2 % Silicium,
Rest Eisen und herstellungsbedingte Verunreinigungen,
enthält, da diese Legierung überdies eine gute Korrosionsbeständigkeit, insbesondere bei Kontakt mit Kraftfahrzeugabgasen, aufweist.

In einer besonders vorteilhaften Ausgestaltung der Erfindung ist der Metallschaumkörper unmittelbar mit dem metallischen Gehäuse metallisch verbunden oder steht mit diesem über ein metallisches Verbindungsstück in Kontakt. Dies bewirkt eine effiziente Wärmeabfuhr vom Metallschaumkörper zum Gehäuse, über dessen Oberfläche Wärme dann abgegeben werden kann. Durch diese Wärmeabfuhr kann der Metallschaumkörper auf einer niedrigeren Temperatur gehalten werden und somit anströmendes Abgas wirkungsvoll abgekühlt werden, was in einer Schonung nachgeschalteter Katalysator- und/oder Filterelemente resultiert.

Um ein gleichmäßiges Anströmen der Stirnseiten von Reinigungsmodulen zu ermöglichen, werden diese frei zugänglich gehalten, indem der Metallschaumkörper vom Reinigungsmodul beabstandet angeordnet ist.

Gemäß einer Variante der Erfindung sind mehrere Reinigungsmodule vorsehen, welche in einem mit dem Gehäuse verbundenen Haltemittel lösbar gehalten sind. Dies erlaubt es, einzelne Reinigungsmodule bei nicht mehr gegebener Funktionstüchtigkeit auf einfache Weise auszutauschen.

Besonders bewährt sich eine erfindungsgemäße Vorrichtung, wenn Abgas in einem Winkel von 90° zu führen ist, nämlich wenn das Gehäuse im Wesentlichen zylinderförmig mit seitlich angeordneten Einlässen und einem stirnseitig angeordneten Auslass ausgebildet ist.

Der Metallschaumkörper kann an sich von beliebiger geometrischer Gestalt sein, bevorzugt ist es jedoch, wenn er in Form einer Platte bzw. eines Breit-Flach-Stückes ausgebildet ist, um eingeleiteten Abgasströmen wenig Widerstand entgegenzusetzen bzw. einem Druckaufbau und damit verringerter Motorleistung entgegenzuwirken. Besonders vorteilhaft ist es in diesem Zusammenhang, wenn sich die Platte bei Betrachtung in einem Querschnitt im Wesentlichen über eine gesamte Breite und/oder Länge des Gehäuses erstreckt, weil dann bei geringem Gegendruck die eingeleiteten Abgasströme über eine entsprechend große Fläche zerstreut werden können.

Die Platte kann mit dem Gehäuse lösbar verbunden sein, wenn sie rasch austauschbar oder entfernbar sein soll.

Weitere Vorteile und Wirkungen der Erfindung ergeben sich aus dem Zusammenhang der Beschreibung und den Ausführungsbeispielen.

Im Folgenden ist die Erfindung anhand zweier möglicher Ausführungsformen noch weitergehend erläutert.

Es zeigen:

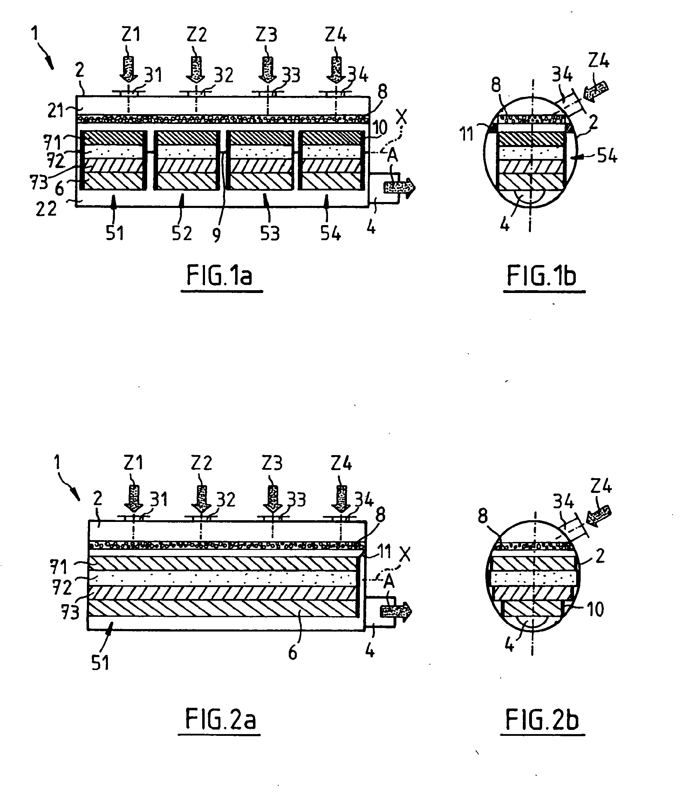

Figur 1a: Einen Querschnitt entlang einer Längsachse einer Vorrichtung mit einem zylinderförmigen Gehäuse und mehreren Reinigungsmodulen;
Figur 1 b: Einen Querschnitt normal zur Längsachse einer Vorrichtung mit einem zylinderförmigen Gehäuse und mehreren Reinigungsmodulen;
Figur 2a: Einen Querschnitt entlang einer Längsachse einer Vorrichtung mit einem zylinderförmigen Gehäuse und einem Reinigungsmodul; und
Figur 2b: Einen Querschnitt normal zur Längsachse einer Vorrichtung mit einem zylinderförmigen Gehäuse und einem Reinigungsmodul.

Figur 1a zeigt einen Querschnitt entlang einer Längsachse X einer Vorrichtung 1 zur Reinigung von Abgasen von Nutzfahrzeugen mit einem zylinderförmigen Gehäuse 2 und mehreren Reinigungsmodulen **51, 52, 53, 54.** Das zylinderförmige Gehäuse **2** besteht aus einem Gehäuseoberteil 21 und einem Gehäuseunterteil **22,** welche miteinander verbunden sind und bei Bedarf geöffnet bzw. getrennt werden können. An das Gehäuse **2** sind Einlässe **31, 32, 33, 34,** durch welche Abgasströme **Z1, Z2, Z3, Z4** einleitbar sind, und ein Auslass **4** für abgeleitetes Abgas **A** angeformt. Abgesehen von den Einlässen **31, 32, 33, 34,** und dem Auslass **4** ist das Gehäuse gasdicht. Eingeleitete Abgasströme **Z1, Z2, Z3, Z4** müssen also gemäß Figur 1a etwa im rechten Winkel zum Auslass **4** gelangen.

Im Inneren des Gehäuses **2** befindet sich einlassseitig ein Metallschaumkörper 8 und diesem nachgeordnet mehrere Reinigungsmodule **51, 52, 53, 54,** welche jeweils ein Filterelement **6** und Katalysatorelemente **71, 72, 73** aufweisen und welche jeweils in einem Haltemittel **9** gehalten sind. Die einzelnen Reinigungsmodule **51, 52, 53, 54** können mit dem Haltemittel **9** jeweils lösbar verbunden sein, damit bei Versagen bzw. Funktionsuntüchtigkeit eines einzelnen der Reinigungsmodule **51, 52, 53, 54** lediglich dieses austauscht werden braucht, wohingegen die übrigen Module unangetastet weiter verwendet werden können. Die Reinigungsmodule **51, 52, 53, 54** sind jeweils von einem gasdichten Mantel **10** umgeben, durch welchen sichergestellt ist, dass das Abgas zur Reinigung die Reinigungsmodule **51, 52, 53, 54** über deren gesamte Länge durchströmt und nicht ungereinigt oder teilweise gereinigt seitlich austreten kann.

Der Metallschaumkörper **8** erstreckt sich in etwa über eine gesamte Länge des Gehäuses **2** und, wie Figur 1b zeigt, über eine Breite desselben. Werden nun intermittierend oder pulsierend Abgasströme **Z1, Z2, Z3, Z4** über die entsprechenden Einlässe **31, 32, 33, 34** eingeleitet, so treffen diese unter einem Winkel auf eine einlassseitige Oberfläche der Metallschaumplatte 8 und werden in dieser in einzelne Teilströme zerteilt, welche schließlich an einer den Reinigungsmodulen **51, 52, 53, 54** zugewandten Oberfläche des Metallschaumkörpers 8 austreten und die Stirnseiten von nachgeschalteten Reinigungsmodulen **51, 52, 53, 54** gleichmäßig anströmen.

Der Metallschaumkörper 8 ist im Gehäuse 2 derart angebracht, dass eingeleitete Abgasströme **Z1, Z2, Z3, Z4** etwa in einem Winkel von 25° auf diesen auftreffen. Die Anbringung kann durch unmittelbare metallische Verbindung wie Löten oder Schweißen erfolgen, so dass eine gute Ableitung der vom Metallschaumkörper 8 aufgenommen Wärme des Abgases an das Gehäuse ermöglicht ist. Gleichwertig dazu kann auch ein metallischer Rahmen **11** zum Halten des Metallschaumkörpers **8** oder dergleichen Verbindungsstück zwischen Gehäuse **2** und Metallschaumkörper **8 ei**ngesetzt werden, sofern ein metallsicher Kontakt vom Metallschaumkörper **8** zum Gehäuse **2** und somit eine effektive Wärmeabfuhr gegeben ist.

Wie erwähnt, beträgt ein Winkel zwischen einem Abgasstrom **Z1, Z2, Z3, Z4** und dem plattenförmigen Metallschaumkörper gemäß Figur 1 a bzw. Figur 1 b etwa 25°. Dadurch wird eine bessere Zerteilung der einzelnen Abgasströme erreicht, als bei einem senkrechten Anströmen des Metallschaumkörpers **8.** In der Praxis haben sich Anströmwinkel von 15° bis 65° bewährt. Unerwartet wurde auch festgestellt, dass bei einer derartigen Anordnung auch die Schallabstrahlung vermindert ist, dem Metallschaumkörper 8 in einer solchen Konstellation also auch eine schalldämpfende Wirkung zukommt.

Im Anschluss an den Metallschaumkörper **8** sind die Reinigungsmodule **51, 52, 53, 54** lösbar in einem Haltemittel **9** und mit ihrer Stirn- bzw. Eingangsfläche jeweils parallel und beabstandet zum plattenförmigen Metallschaumkörper **8** angeordnet, was eine gleichmäßige Verteilung des zu reinigenden Abgases über die verschiedenen Reinigungsmodule **51, 52, 53,** 54 ermöglicht. Sollte es dennoch zu einer dauerhaft ungleichen Belastung der Reinigungsmodule **51, 52, 53, 54** kommen und ein einzelnes funktionsuntüchtig werden, so kann dieses aus Haltemittel **9** entnommen und durch ein neues ersetzt werden.

Die Figuren 2a und 2b zeigen eine alternative Ausführungsform einer Vorrichtung **1,** welche sich von einer Ausführungsform entsprechend Figur 1 a und Figur 1b unter anderem dadurch unterscheidet, dass anstelle mehrerer Reinigungsmodule nur ein einziges Reinigungsmodul **51** vorgesehen ist. Das Reinigungsmodul **51** ist ähnlich wie die in Figur 1a und Figur 1b gezeigten Module aus mehreren miteinander verbundenen Katalysatorelementen **71, 72, 73** und einem Filterelement **6** gebildet. Im Gegensatz zu den in Figur 1 a und Figur 1 b gezeigten Modulen erstrecken sich die jeweiligen Katalysatorelemente **71, 72, 73** und das Filterelement **6** einerseits über im Wesentlichen die gesamte Länge des Gehäuses **2** und sind andererseits in ihrer jeweiligen Breite einem maximal zur Verfügung stehenden freien Gehäusedurchmesser angepasst. Ein Dichtelement **11** sorgt dafür, dass das gesamte Abgas durch das Reinigungsmodul **51** strömt. Die Anpassung von Katalysator- und Filterelementen führt zu einer verbesserten Ausnutzung des Gehäuseinneren für Reinigungsmodule und konsequenterweise zu einer verbesserten Abgasreinigung.

Die Herstellung eines erfindungsgemäß vorgesehenen Metallschaumkörpers 8 kann grundsätzlich nach beliebigen, dem Fachmann bekannten Herstellungsrouten erfolgen. Besonders bewährt hat sich im Zusammenhang mit der Erfindung, den Metallschaumkörper dadurch herzustellen, dass zuerst durch Aufschäumen eines Granulates ein poröser Polyurethanschaum hergestellt wird, der über eine Suspension mit Metallpulver gefüllt wird; anschließend wird durch Erwärmen der für die Porenstruktur maßgebende Polyurethanschaum ausgebrannt und der verbleibende Metallschaum unter Beibehaltung seiner offenporigen Struktur gesintert. Mit einem derartigen Verfahren lassen sich strukturstabile Metallschaumkörper endabmessungsnah herstellen, so dass diese gegebenenfalls ohne weitere Maßnahmen in eine Vorrichtung zum Reinigen von Kraftfahrzeugabgasen einsetzen lässt.

## Patentansprüche

1. Vorrichtung (1) zum Reinigen von Kraftfahrzeugabgasen, umfassend ein metallisches Gehäuse (2) mit mehreren Einlässen (31, 32, 33, 34) für ein zeitversetztes Einleiten einzelner Abgasströme (Z1, Z2, Z3, Z4) und zumindest einem Auslass (4) zum Ableiten von Abgas, wobei innerhalb des Gehäuses (2) zumindest ein Reinigungsmodul (51, 52, 53, 54) mit zumindest einem Filterelement (6) und/oder zumindest einem Katalysatorelement (71, 72, 73) derart angeordnet ist, dass eingeleitete Abgasströme (Z1, Z2, Z3, Z4) durch das Reinigungsmodul (51, 52, 53, 54) zum Auslass strömen, **dadurch gekennzeichnet, dass** dem Reinigungsmodul (51, 52, 53, 54) einlassseitig ein gasdurchlässiger Metallschaumkörper (8) vorgeschalten ist.

2. Vorrichtung (1) nach Anspruch 1, **dadurch gekennzeichnet, dass** der Metallschaumkörper (8) eine Porenweite von 5 bis 20 ppi aufweist.

3. Vorrichtung (1) nach einem der Ansprüche 1 oder 2, **dadurch gekennzeichnet, dass** der Metallschaumkörper (8) aus einer Eisenbasislegierung gebildet ist.

4. Vorrichtung (1) nach Anspruch 3, **dadurch gekennzeichnet, dass** die Eisenbasislegierung (in Gewichtsprozent)
15 bis 30 % Chrom,
5 bis 10 % Vanadium,
bis 2 % Aluminium,
bis 2 % Yttrium,
bis 2 % Cer,
bis 2 % Silicium,
Rest Eisen und herstellungsbedingte Verunreinigungen,
enthält.

5. Vorrichtung (1) nach einem der Ansprüche 1 bis 4, **dadurch gekennzeichnet, dass** der Metallschaumkörper (8) unmittelbar mit dem metallischen Gehäuse (2) metallisch verbunden ist.

6. Vorrichtung (1) nach einem der Ansprüche 1 bis 5, **dadurch gekennzeichnet, dass** der Metallschaumkörper (8) vom Reinigungsmodul (51, 52, 53, 54) beabstandet angeordnet ist.

7. Vorrichtung nach einem der Ansprüche 1 bis 6, **dadurch gekennzeichnet, dass** mehrere Reinigungsmodule (51, 52, 53, 54) vorsehen sind, welche in einem mit dem Gehäuse (2) verbundenen Haltemittel (9) lösbar gehalten sind.

8. Vorrichtung (1) nach einem der Ansprüche 1 bis 7, **dadurch gekennzeichnet, dass** das Gehäuse (2) im Wesentlichen zylinderförmig mit seitlich angeordneten Einlässen (31, 32, 33, 34) und einem stirnseitig angeordneten Auslass (4) ausgebildet ist.

9. Vorrichtung (1) nach einem der Ansprüche 1 bis 8, **dadurch gekennzeichnet, dass** der Metallschaumkörper (8) in Form einer Platte ausgebildet ist.

10. Vorrichtung nach Anspruch 9, **dadurch gekennzeichnet, dass** sich die Platte bei Betrachtung in einem Querschnitt im Wesentlichen über eine gesamte Breite und/oder Länge des Gehäuses (2) erstreckt.

11. Vorrichtung nach Anspruch 9 oder 10, **dadurch gekennzeichnet, dass** die Platte mit dem Gehäuse (2) lösbar verbunden ist.
